# EUROPEAN PATENT APPLICATION

(11) **EP 1 398 686 A2**
(43) Date of publication of application: **17.03.2004**
(21) Application number: 03019889.9
(22) Date of filing: 02.09.2003
(51) Int. Cl.: G05D 16/20

(54) **Pressure regulating valve assembly**

(30) Priority: 12.09.2002 IT mi20021943
(71) Applicant: HP High Pressure SRL, 20154 Milano (IT)
(72) Inventor: Zucco, Gianni, 27010 Giussago Pavia (IT); Zucco, Luciano, 20082 Noviglio (Milano) (IT)
(74) Representative: Petruzziello, Aldo

(57) **Abstract**

A valve assembly (1) for regulation of the circulating pressure in a system of the type provided with a valve body (3) provided with a seat (5) which receives a shutter element (2), axially translatable and not, to open or close selectively a duct (4) for passage of fluid to the system. Motor means guided by control means are provided to operate the shutter element (2).

## Description

The present invention pertains to a valve assembly and in particular to a valve assembly which allows the pressure of a fluid circulating in a system to be regulated.

In hydraulic systems, and especially in open hydraulic systems, that is, those not consisting of a closed circuit, the condition of the fluid is continuously changing. Therefore, precisely because of this continuously changing condition of the fluid, control of the pressure, in order to keep it within set values, is particularly critical.

In such systems, pressure control usually takes place through manual adjustment of a needle valve which, by changing the fluid passage section in a duct of the system, allows the pressure upstream of the valve to be increased or lowered.

Measurement of the pressure in the system takes place through suitable sensors, such as a pressure transducer. On the basis of the data detected by the transducer, manual adjustment of the pressure control valve is performed.

Measurement of the system data is performed following the occurrence of failures in operation of the system and/or at regular intervals established by the operator.

It is therefore evident that between one measurement time and the next the fluid may have changed its condition and consequently its pressure several times, causing malfunctioning of the system itself and possible damage to the pressure sensitive elements.

The object of the present invention is to overcome the problems of the prior art by providing a valve assembly that allows the pressure in the system to be regulated automatically.

Another object of the present invention is to provide a valve assembly that is simple and cheap to produce.

These and other objects are achieved by the present invention which has the characteristics claimed in appended independent claim 1.

Advantageous embodiments of the invention are apparent form the dependent claims.

Essentially, a valve assembly according to the present invention is provided with a valve body having a seat which receives a shutter element, axially translatable and not, to open or close selectively a fluid passage duct of a system and is characterised in that motor means are provided guided by control means to operate said shutter element.

In the present description the term "translation" signifies both a pure translation of the shutter element and a rotary translation which brings the shutter element to open or close the fluid passage duct.

Control of the pressure on line and in an automatic manner makes it possible always to have the desired pressure, thus improving the performance of the system and protecting the constituent parts thereof from spikes or sudden changes in pressure.

According to an advantageous feature of the present invention, the control means comprise at least one sensor for measuring the pressure of the fluid circulating in the system and at least one processor to process the signals received from the sensor and control the motor means accordingly.

According to a preferential feature of the present invention, the motor means comprise an electric motor operating the shutter element by means of a transmission member.

Preferably, according to the present invention, the valve assembly is provided with means to open or close the fluid passage completely and abruptly.

The means for completely and abruptly opening and closing the fluid passage duct advantageously comprise a piston element constrained to the shutter element and slidable, under the action of a fluid under pressure, in a chamber formed in the valve body.

According to another preferential feature of the present invention, the valve assembly comprises safety means to interrupt operation of the motor means.

Further characteristics and advantages of the present invention will be made clearer by the description that follows, made by way of non-limiting illustration with reference to the appended drawings, in which:
- Figure 1 is an axial sectional view of an embodiment of the valve assembly according to the present invention;
- Figure 2 is an axial sectional view of an alternative embodiment of the valve assembly according to the present invention;
- Figure 3 is a diagrammatic view of an inverted osmosis system in which a valve assembly according to the present invention is installed.

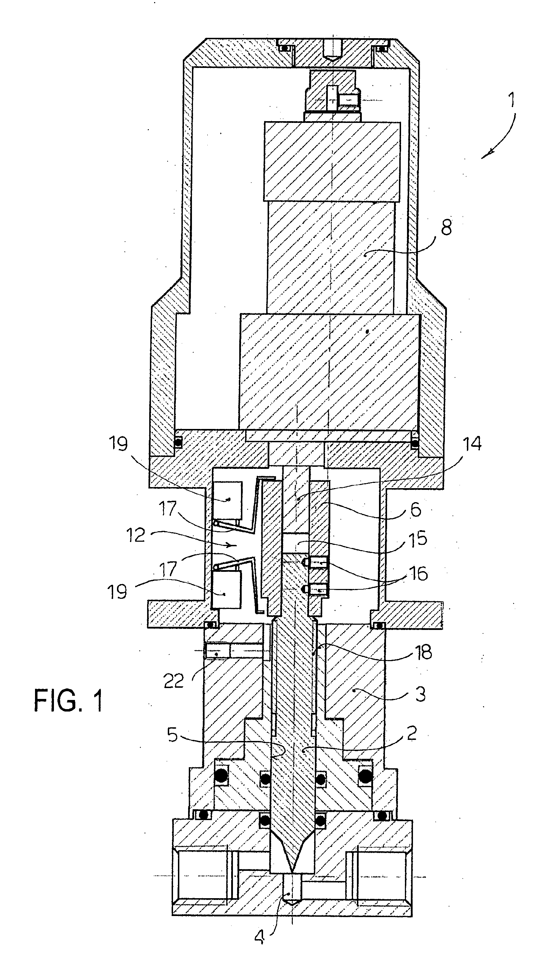

With reference to Figure 1, a valve assembly according to the present invention is illustrated and in particular a valve assembly 1 for regulation of the pressure of a fluid circulating in a system. The valve assembly is provided with a shutter element 2, such as a needle, translatable in a seat 5 formed in the valve body 3 to open or close selectively the fluid passage duct 4.

In the present invention what is meant by selective opening or closing is the possibility offered by the shutter element 2 of varying the section of the duct 4, as regards closing or opening, between a completely open and a completely closed position, as chosen, according to requirements.

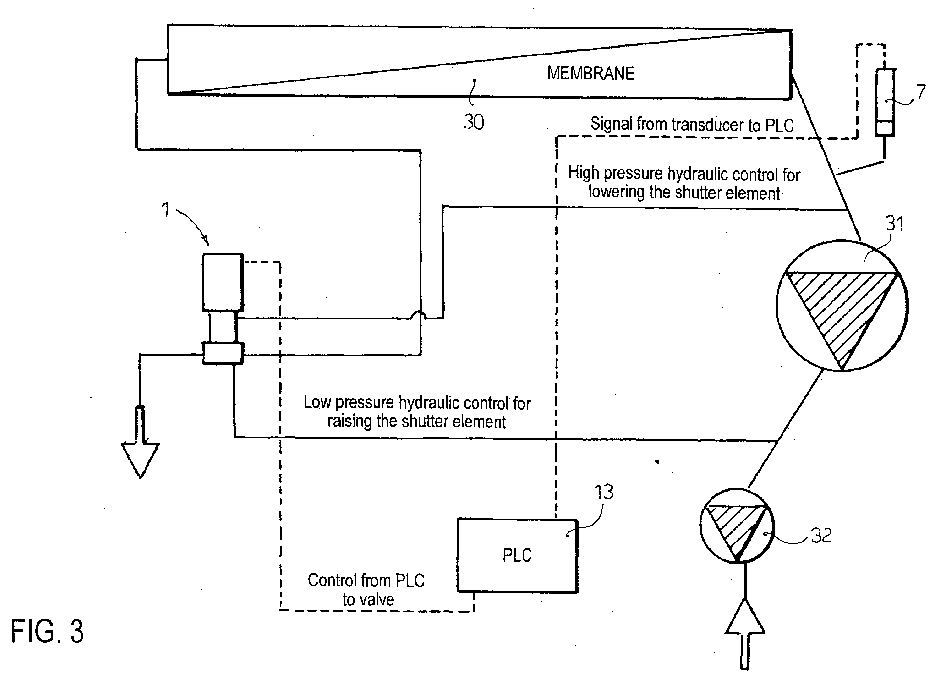

The shutter element 2 is operated by motor means guided by special control means. In particular, the control means are represented (see Figure 3) by a sensor 7 able to detect the pressure of the fluid circulating in the system and by a computer 13 able to analyse the data provided by the sensor 7 to operate the motor means according to said data. The presence of the control means allows a continuous regulation of the pressure in the system and the possibility of timing the pressure intervals. In this case, it is possible to establish intervals of time within which the system must have a certain pressure which can differ for the pressure foreseen in the preceding and subsequent intervals; regulation of the system is therefore obtained according to the pressure foreseen for a certain interval of time.

The motor means are represented by an electric motor 8 and a transmission member, connected to the shutter element 2.

The electric motor 8 represented in Figure 1 is advantageously a geared motor the drive shaft 14 whereof is engaged in a special seat 15 with a connecting coupling 6. The coupling between drive shaft 14 and seat 15 is of the splined type and allows axial sliding of the drive shaft 14 in the seat 15 of the coupling 6, but prevents relative rotation thereof.

For this purpose, the drive shaft 14 and the seat 15 of the coupling 6 have a corresponding D-shaped section.

The seat 15, at the remaining end of the coupling 6, forms a coupling with the shutter element 2. The shutter element 2 is blocked in the seat 15 of the coupling by two dowels 16.

The seat 5 of the valve body 3 has at its upper end a thread 18 engageable with a corresponding thread formed on the outer surface of the shutter element 2 to allow conversion of the rotary motion of the motor into a translation of the shutter element 2 in the seat 5. The shaft 14 of the geared motor 8 draws into rotation the coupling 6 which in turn causes the shutter element 2 to rotate with respect to the valve body 3. The constraint imposed by the thread 18 forces the shutter element to translate, rotating inside the seat 5 to open or close the fluid passage duct 4, according to the type of rotation imparted, clockwise or anticlockwise.

The valve assembly 1 is furthermore provided with safety means 12 to interrupt the rotation of the motor 8 in the event of malfunctioning of the sensor 7. In fact, were the system not provided with said safety means 12, if the sensor 7, not detecting the change in pressure in the system, continued to order the motor means to cause the shutter element to translate, even though it had reached the end of its stroke, damage could be done to system.

In the embodiment shown in Figure 1 two mechanical arms 17 placed at the beginning and end of the stroke of the coupling 6 are shown as safety means 12. The two mechanical arms 17 operate two microswitches 19 to switch off the current to the electric motor 8, level with the positions of start and end of stroke of the coupling 6 and consequently of the shutter element 2.

In an alternative embodiment, not shown, there is provided as the safety means 12 a flexible drive coupling which, at the end of stroke, if the motor 8 does not stop, is elastically deformed, and in particular bends, to avoid damage to the shutter element 2 and the duct 4.

In a further embodiment, a shutter element 2 having a side surface provided with a plurality of splines which pass longitudinally through the shutter element 2 for at least a portion of its extension forming an indentation or toothing engageable with the corresponding toothing of a sprocket connected to the drive shaft 14.

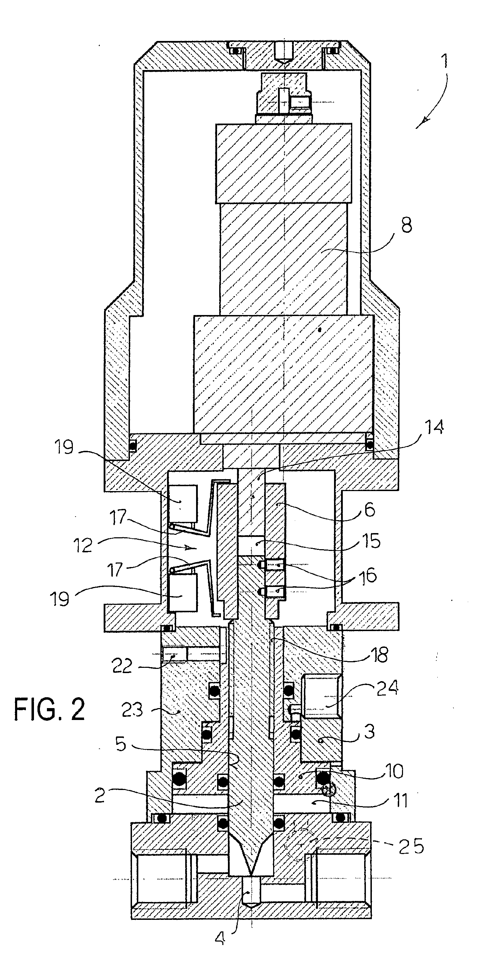

The valve assembly shown in Figure 2 is substantially similar to the preceding one (and therefore like parts bear the same reference numerals and are not described in detail herein) except that it comprises means for completely and abruptly opening or closing the fluid passage duct 4.

In particular, for this purpose the valve body comprises a piston element 10 which carries the shutter element in which there are formed the seat 5 and the thread 18 and a supporting container 23 in which there is formed a chamber 11 for translation of the piston element 10. The piston element 10, constrained by means of the thread 18 to the shutter 2, is blocked with respect to the supporting container 23 by a dowel 22.

In particular, relative rotation of the piston element 10 with respect to the supporting container 23 is prevented by the dowel 22.

The chamber 11 has two ports 24, 25 placed respectively above and below the piston element 10 for introduction of a fluid under pressure which, acting on the piston element 10, causes lowering or raising thereof inside the chamber 11. Raising or lowering of the piston element 10, through the action of the fluid under pressure, leads to abrupt lowering or raising of the shutter element 2 constrained thereto and consequent overall closing or opening of the duct 4.

In an alternative embodiment only one port for introduction of the fluid under pressure is present, provided in the chamber 11 above the piston element 10. Introduction of fluid under pressure through this port causes lowering of the piston member 10 which is normally in a raised position because of elastic means, such as spiral springs, provided at the bottom of the chamber 11 and acting axially between said bottom and the face of the piston 10.

The valve assembly according to the present invention is particularly useful in all those systems such as the reverse osmosis water desalination system illustrated in Figure 3, in which it is important to maintain a constant pressure value in the portion of plant in which the membrane 30 is provided.

The system in Figure 3 comprises a membrane 30 and a valve 1 according to the present invention, and in particular according to the embodiment shown in Figure 2, placed downstream of the membrane, a pressure transducer 7 placed upstream of the membrane 30, an electronic processor 13, such as a PLC, operatively connected to the valve 1 and to the transducer 7 and two pumps, one high pressure 31 and one low pressure 32, situated upstream of the valve 1. In order to operate the piston element 10, the pumps 31, 32 are connected fluidly to the ports 24, 25 of the valve 1 for introduction of the fluid under pressure into the chamber 11.

On start-up of the system the low pressure pump 32 causes the fluid to circulate in the system and in the chamber 11 through the port 25 situated beneath the piston element 10. Introduction of fluid into the chamber 11 raises the shutter element 2, completely opening the passage of the duct 4 to cause the passage of fluid in the system to increase.

Subsequently, with the entry into operation of the high pressure pump 31, the shutter element 2 will be pushed downwards, completely closing the fluid passage duct 4 and raising the pressure in the portion of the system upstream of the valve 1 to the pre-set value. The pressure upstream of the valve 1 will now be controlled automatically by the valve assembly and by the method according to the present invention. In particular, the method according to the present invention comprises the following stages:
a) measurement of the pressure downstream of the system, on line and/or according to pre-established intervals of time by a pressure transducer 7;
b) processing by the processor 13 of the pressure measured by the pressure transducer 7;
e) if the pressure measured does not correspond to the set pressure, sending of an actuating command to the motor means;
c) actuation of the motor means to translate the shutter element 2 according to the actuation command received, and in particular to lower the shutter to increase the pressure in the system or raise the shutter to lower the pressure in the system.

Many modifications and variations can be made to the present invention without departing from the scope of protection thereof. By way of example, in an alternative embodiment, not shown, it is possible to use a stepping motor with the output shaft in axis with the shutter and in direct engagement therewith.

## Claims

1. A valve assembly (1) for regulating the pressure of a system of the type comprising a valve body (3) provided with a seat (5) which receives a shutter element (2) axially translatable to open or close selectively a fluid passage duct (4) of said system, **characterised in that** there are provided motor means guided by control means to actuate said shutter element (2).

2. A valve assembly (1) according to claim 1, **characterised in that** said control means comprise at least one sensor (7) measuring the pressure of the fluid circulating in the system and at least one processor (13) to process the signals received from said at least one sensor (7) and control said motor means.

3. A valve assembly according to claim 1 or 2, **characterised in that** said motor means comprise an electric motor (8), actuating said shutter element (2), by means of a transmission member (6).

4. A valve assembly (1) according to claim 3, **characterised in that** said electric motor (8) is a geared motor or a stepped motor.

5. A valve assembly (1) according to claim 3 or 4, **characterised in that** said motor means further comprise a drive shaft (14) engaged, in an axially slidable manner, in a seat (15) of said transmission member (6) constrained at the bottom to the shutter element (2).

6. A valve assembly (1) according to claim 5, **characterised in that** said seat (5) comprises a thread (18) engageable in a corresponding thread made on said shutter element (2) to convert the rotation of said drive shaft (14) into an axial translation of said shutter element (2).

7. A valve assembly (1) according to any one of the preceding claims, **characterised in that** it further comprises means for completely and abruptly opening and closing said fluid passage duct (4).

8. A valve assembly (1) according to claim 5, **characterised in that** said means for completely and abruptly opening and closing the fluid passage duct (4) comprise a piston element (10) constrained to said shutter element (2) and slidable in a chamber (11) formed in the valve body (3) under the action of a fluid under pressure and with a possible spring return.

9. A valve assembly according to claim 8, **characterised in that** it comprises two ports (24, 25) for introduction of fluid, situated respectively above and below said piston element (10) and in fluid connection with means (31, 32) for supply of fluid under pressure and with a possible spring return.

10. A valve assembly (1) according to any one of the preceding claims **characterised in that** it comprises safety means (12) to interrupt operation of said motor means.

11. A method for pressure regulation in a system, provided with a valve assembly (1) according to any one of the preceding claims, **characterised in that** it comprises the following stages:
a) measurement of the pressure downstream of the system;
b) processing of the measured pressure by a processor (13);
e) if the pressure detected does not correspond to the set pressure, sending of an actuation command to the motor means;
c) operation of the shutter element (2) according to the actuation command.
